(19) Europäisches Patentamt
European Patent Office
Office européen des brevets

(11) EP 4 715 361 A1

(12) DEMANDE DE BREVET EUROPEEN

(43) Date de publication:
25.03.2026 Bulletin 2026/13

(21) Numéro de dépôt: 25202182.9

(22) Date de dépôt: 15.09.2025

(51) Classification Internationale des Brevets (IPC):
*G01M 11/00* (2006.01)

(52) Classification Coopérative des Brevets (CPC):
G01M 11/33

(84) Etats contractants désignés:
AL AT BE BG CH CY CZ DE DK EE ES FI FR GB
GR HR HU IE IS IT LI LT LU LV MC ME MK MT NL
NO PL PT RO RS SE SI SK SM TR
Etats d'extension désignés:
BA
Etats de validation désignés:
GE KH LA MA MD TN

(30) Priorité: 20.09.2024 FR 2410022

(71) Demandeur: Commissariat à l'Energie Atomique
et aux Energies
Alternatives
75015 Paris (FR)

(72) Inventeurs:
• FOWLER, Daivid
38054 Grenoble cedex 09 (FR)
• CASTANY, Olivier
38054 GRENOBLE cedex 09 (FR)
• KUT KING KAN, Warren
38054 GRENOBLE Cedex 09 (FR)

(74) Mandataire: Hautier IP
20, rue de la Liberté
06000 Nice (FR)

(54) **SYSTÈME DE MESURE DE PERTES DANS UN CIRCUIT PHOTONIQUE INTÉGRÉ ET PROCÉDÉ ASSOCIÉ**

(57) Système de mesure de pertes dans un circuit photonique intégré et procédé associé L'invention concerne un système (100) de mesure de pertes d'insertion absolues ILcp d'un circuit photonique (20) comprenant des interfaces d'entrée (21) et de sortie (22), le système comprenant une première fibre optique (1) configurée pour transmettre le faisceau émis par une source de lumière (10) vers un premier connecteur, une fibre optique d'injection (2) connectée à la première fibre à l'aide du premier connecteur et configurée pour transmettre le faisceau vers l'interface d'entrée, une fibre optique de collection (3) configurée pour collecter le faisceau de l'interface de sortie, une deuxième fibre optique (4) connectée à la fibre de collection à l'aide d'un deuxième connecteur et configurée pour transmettre le faisceau vers un détecteur pour mesurer une puissance de caractérisation Pcp, le système comprenant un élément de calibration (110) présentant une perte d'insertion ILmir, le système étant configuré pour mesurer les pertes d'insertions ILcp, après sa calibration via l'élément de calibration.

FIG. 1A

EP 4 715 361 A1

**Description**

**DOMAINE TECHNIQUE**

Le domaine de l'invention est celui de la photonique intégrée sur puce. L'invention concerne plus particulièrement le couplage optique d'une puce photonique avec un dispositif extérieur, par exemple avec une fibre optique ou un ensemble de fibres optiques.

**ETAT DE LA TECHNIQUE**

Les composants d'optique intégrée, en particulier les composants de la photonique sur silicium, peuvent combiner de nombreuses fonctions sur une même puce, également appelée PIC, de l'acronyme anglais signifiant « Photonic Integrated Circuit ». Dans ces composants, la lumière est conduite dans des guides optiques de petite taille, d'une largeur typiquement inférieure au micromètre, entre des blocs fonctionnels densément répartis au sein du PIC.

En photonique sur silicium, la lumière transportée dans le plan du PIC peut être dirigée hors du plan par des éléments fonctionnels dédiés, comme par exemple des coupleurs optiques à réseaux de diffraction (ou « Grating Couplers » en anglais). Ces coupleurs peuvent être utilisés en entrée pour coupler la lumière d'une fibre optique vers un guide d'onde du circuit photonique, ou en sortie pour coupler la lumière d'un guide d'onde vers une fibre optique. Le coupleur optique à réseau diffractif est intégré, avec les guides d'onde, sur un même substrat.

Pour le développement et le déploiement de ces coupleurs optiques, il est important de caractériser de manière précise les pertes d'insertion optiques liées à ces coupleurs. Actuellement, les pertes d'insertion des coupleurs à réseaux de diffraction peuvent approcher une valeur de 1 dB environ pour les composants les plus efficaces. Environ 80 % de la lumière est donc transférée entre la fibre optique et le guide d'onde du circuit photonique intégré. Pour caractériser les composants avec précision, il est important que l'incertitude sur la mesure des pertes d'insertion soit bien inférieure à la valeur mesurée. Cependant, une précision de mesure inférieure à 0,2 dB est actuellement difficile à atteindre. En effet, les systèmes de mesure des pertes d'insertion d'un circuit photonique intégré comprennent des fibres optiques qui sont généralement connectées entre elles par des connecteurs de fibres. Ces derniers permettent des connections et déconnections faciles des fibres, mais induisent une incertitude dans les valeurs mesurées.

Un objet de la présente invention est donc d'améliorer la précision de mesure des pertes d'insertion dans un circuit photonique intégré. L'invention propose notamment une solution permettant la mesure des pertes d'insertion absolues dans un circuit photonique intégré indépendamment des pertes produites par des connecteurs de fibres.

Les autres objets, caractéristiques et avantages de la présente invention apparaîtront à l'examen de la description suivante et des dessins d'accompagnement. Il est entendu que d'autres avantages peuvent être incorporés.

**RESUME**

Pour atteindre cet objectif, selon un premier aspect de l'invention on prévoit un système de mesure de pertes d'insertion absolues $IL_{cp}$ d'un circuit photonique intégré sur un substrat, ledit circuit photonique comprenant au moins un guide d'onde, une interface d'entrée et une interface de sortie couplées à l'au moins un guide d'onde, l'interface d'entrée étant configurée pour recevoir un faisceau lumineux et le diriger vers l'au moins un guide d'onde et l'interface de sortie étant configurée pour recevoir le faisceau lumineux transmis par l'au moins un guide d'onde et le diriger en dehors du circuit photonique, le système comprenant :

- une source de lumière émettant le faisceau lumineux,
- une première fibre optique couplée à la source de lumière, configurée pour transmettre le faisceau lumineux vers un premier connecteur de fibres,
- une fibre optique d'injection connectée à la première fibre optique à l'aide du premier connecteur de fibres, ladite fibre optique d'injection étant configurée pour transmettre le faisceau lumineux vers l'interface d'entrée du circuit photonique, le premier connecteur de fibres présentant une première perte d'insertion $IL_{C12}$,
- une fibre optique de collection configurée pour collecter le faisceau lumineux provenant de l'interface de sortie du circuit photonique,
- une deuxième fibre optique connectée à la fibre optique de collection à l'aide d'un deuxième connecteur de fibres, la deuxième fibre étant configurée pour transmettre le faisceau lumineux collecté par la fibre optique de collection vers un détecteur, le deuxième connecteur de fibres présentant une deuxième perte d'insertion $IL_{C34}$,
- le détecteur configuré pour mesurer une puissance optique de caractérisation $P_{cp}$ du faisceau lumineux transmis par la deuxième fibre optique,

le système comprenant en outre un élément de calibration présentant une perte d'insertion $ILmir$ fixe et connue, ledit élément de calibration permettant de s'affranchir des première et deuxième pertes d'insertion ILC12, ILC34, de sorte que le système est configuré pour mesurer les pertes d'insertions absolues $IL_{cp}$ du circuit photonique, après calibration du système via l'élément de calibration.

Le système décrit ci-dessus, permet de mesurer précisément les pertes d'insertion absolues $IL_{cp}$ du circuit photonique intégré, sans avoir recours à des approximations ou des comparaisons avec des normes externes. La mesure de pertes absolues est notamment avantageuse quand les interfaces d'entrée et de sortie du circuit photonique sont des coupleurs à réseaux couramment utilisés dans les circuits photoniques intégrés, et dont l'optimisation nécessite une mesure précise des pertes d'insertion avec des faibles incertitudes. L'élément de calibration, dont la perte d'insertion $IL_{mir}$ est avantageusement fixe et connue avec une bonne précision, permet de calibrer le système de mesure de manière fiable. Cela permet de mesurer les pertes d'insertions absolues $IL_{cp}$ du circuit photonique et des coupleurs à réseaux, en s'affranchissant des pertes $IL_{C12}$ et $IL_{C34}$ liées aux connecteurs des fibres qui peuvent être une source d'incertitude.

Selon un deuxième aspect de l'invention, on prévoit un procédé de mesure de pertes d'insertions absolues $IL_{cp}$ du circuit photonique en utilisant le système selon l'invention, ledit procédé comprenant, lors d'une étape de calibration :

- une transmission par la première fibre optique, du faisceau lumineux émis par la source de lumière, vers la fibre optique d'injection en passant par le premier connecteur de fibres,
- une transmission par la fibre optique d'injection du faisceau lumineux vers l'élément de calibration,
- une collection par la fibre optique de collection du faisceau lumineux provenant de l'élément de calibration, vers la deuxième fibre optique, en passant par le deuxième connecteur de fibres,
- une transmission par la deuxième fibre optique, du faisceau lumineux collecté par la fibre optique de collection, vers le détecteur,
- une première mesure par le détecteur de la puissance optique de calibration $P_{rm}$ du faisceau lumineux transmis par la deuxième fibre optique, ladite première mesure comprenant les première et deuxième pertes d'insertion $IL_{C12}$, $IL_{C34}$,

le procédé comprenant en outre, lors d'une étape de mesure :

- une transmission par la première fibre optique, du faisceau lumineux émis par la source de lumière, vers la fibre optique d'injection en passant par le premier connecteur de fibres,
- une transmission par la fibre optique d'injection du faisceau lumineux vers l'interface d'entrée du circuit photonique,
- une collection par la fibre optique de collection du faisceau lumineux provenant de l'interface de sortie du circuit photonique, vers la deuxième fibre optique, en passant par le deuxième connecteur de fibres,
- une transmission par la deuxième fibre optique, du faisceau lumineux collecté par la fibre optique de collection, vers le détecteur,
- une deuxième mesure par le détecteur de la puissance optique de caractérisation $P_{cp}$ du faisceau lumineux transmis par la deuxième fibre optique, la deuxième mesure permettant de déterminer les pertes d'insertion absolues $IL_{cp}$ du circuit photonique, par comparaison avec la première mesure.

Ce procédé de mesure des pertes d'insertion absolues $IL_{cp}$ du circuit photonique permet de s'affranchir des pertes d'insertion liées aux connecteurs de fibres. Le circuit de mesure, comprenant essentiellement les fibres optiques, est inchangé en passant de l'étape de la calibration du système par l'élément de calibration à l'étape de mesure de la puissance optique de caractérisation $P_{cp}$. Cela permet de mesurer avec précision et d'une manière absolue les pertes d'insertion du circuit photonique sans la nécessité de brancher/débrancher les fibres optiques des connecteurs de fibres.

**BREVE DESCRIPTION DES FIGURES**

Les buts, objets, ainsi que les caractéristiques et avantages de l'invention ressortiront mieux de la description détaillée d'un mode de réalisation de cette dernière qui est illustré par les dessins d'accompagnement suivants dans lesquels :

Les figures 1A et 1B illustrent schématiquement un système de mesure des pertes d'insertion absolues d'un circuit photonique selon différents exemples de réalisation de la présente invention.

La figure 2 illustre schématiquement un système de mesure des pertes d'insertion d'un circuit photonique selon une approche conventionnelle.

La figure 3 illustre schématiquement un système de mesure des pertes d'insertion absolues d'un circuit photonique dans une configuration de calibration selon un exemple de réalisation.

La figure 4 illustre un graphe représentant les positions relatives des différents composants du système de mesure des pertes d'insertion absolues d'un circuit photonique selon un exemple de réalisation.

Les figures 5A et 5B illustrent schématiquement un système de mesure des pertes d'insertion absolues d'un circuit photonique selon un premier mode de réalisation.

Les figures 6A et 5B illustrent schématiquement un système de mesure des pertes d'insertion absolues d'un circuit photonique selon un deuxième mode de réalisation.

Les figures 7A et 7B illustrent schématiquement un système de mesure des pertes d'insertion absolues d'un circuit photonique selon un troisième mode de réalisation.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques.

## DESCRIPTION DÉTAILLÉE

Avant d'entamer une revue détaillée de modes de réalisation de l'invention, sont énoncées ci-après des caractéristiques optionnelles qui peuvent éventuellement être utilisées en association ou alternativement :

Selon un exemple, le système est tel que :

- l'élément de calibration est configuré pour recevoir le faisceau lumineux transmis par la fibre optique d'injection, et réfléchir le faisceau lumineux vers la fibre optique de collection,
- le détecteur est configuré pour mesurer une puissance optique de calibration $P_{rm}$ du faisceau lumineux reçu et réfléchi par l'élément de calibration.

L'élément de calibration permet, lors de la calibration du système, la transmission par réflexion du faisceau lumineux depuis la fibre optique d'injection vers la fibre optique de détection, sans la nécessité de débrancher les fibres des connecteurs. Cette transmission est réalisée par une ou plusieurs réflexions au niveau de l'élément de calibration.

On nomme axe optique le trajet du rayon central du faisceau de lumière issu de la fibre d'injection et son évolution après chaque surface optique rencontrée, jusqu'à la fibre optique de détection.

On nomme axe normal d'un miroir l'axe perpendiculaire à la surface du miroir au niveau du point de réflexion de l'axe optique.

Selon un exemple, l'élément de calibration comprend au moins un miroir présentant une surface courbe ellipsoïdale. Selon un exemple, une direction de propagation du faisceau lumineux et un axe normal de l'au moins un miroir sont compris dans un même plan non parallèle à un plan d'extension principal du substrat.

La surface courbe ellipsoïdale du miroir permet de réfléchir le faisceau lumineux issu de la fibre optique d'injection vers la fibre optique de collection sans pertes significatives. En effet, la forme ellipsoïdale du miroir permet de focaliser et de diriger le faisceau lumineux avec précision lors de la transmission du faisceau entre les deux fibres en minimisant les pertes.

Selon un exemple, l'écart quadratique moyen $\Delta\delta$ entre la surface courbe ellipsoïdale et une surface ellipsoïdale idéale est inférieur ou égal à 30 nm, de préférence inférieur ou égal à 20 nm.

L'écart à la forme ellipsoïdale idéale limite le taux de transmission du faisceau lumineux dans la fibre optique de collection après réflexion sur la surface courbe. Les technologies de fabrication actuelles permettent d'obtenir un écart quadratique moyen $\Delta\delta$ vis-à-vis de la forme ellipsoïdale idéale inférieur à 30 nm, donnant lieu à une perte d'insertion $IL_{surf} = 0,36$ dB, soit un taux de perte optique inférieur à 8%.

Selon un exemple, la surface courbe de l'au moins un miroir est recouverte d'une couche métallique à base d'aluminium.

Selon un exemple, la perte d'insertion $IL_{mir}$ de l'élément de calibration est inférieure ou égale à 0,85 dB.

Ces valeurs de la perte d'insertion $IL_{mir}$ de l'élément de calibration sont fixes et sont déterminées avec une précision de l'ordre de $\pm\,0,1$ dB, ce qui est inférieur à la reproductibilité de la connexion entre deux connecteurs de fibres optiques.

Selon un exemple, l'élément de calibration comprend un seul miroir configuré de sorte que le faisceau lumineux transmis par la fibre optique d'injection soit directement réfléchi sur ledit miroir vers la fibre optique de collection.

Ce premier mode de réalisation du système de mesure est adapté à une configuration croisée des fibres optiques d'injection et de collection courante dans les systèmes de mesure des pertes d'insertion d'un circuit photonique. L'utilisation d'un miroir présentant une surface ellipsoïdale dans cette configuration croisée, permet la transmission du faisceau lumineux de la fibre optique d'injection à la fibre optique de détection en une seule réflexion du faisceau lumineux sur la surface courbe du miroir.

Selon un exemple, l'élément de calibration comprend une paire de miroirs présentant chacun une surface courbe, les deux miroirs étant disposés de sorte que leurs axes normaux se croisent, l'élément de calibration étant configuré de sorte que le faisceau lumineux transmis par la fibre optique d'injection soit réfléchi par l'un des deux miroirs vers l'autre puis réfléchi par l'autre des deux miroirs vers la fibre optique de collection.

Ce deuxième mode de réalisation du système de mesure est adapté à une configuration parallèle des fibres optiques d'injection et de collection courante dans les systèmes de mesure des pertes d'insertion d'un circuit photonique. L'utilisation de deux miroirs à surface parabolique dans cette configuration parallèle, permet la transmission du faisceau lumineux de la fibre optique d'injection à la fibre optique de détection en deux réflexions successives du faisceau lumineux sur les surfaces paraboliques des miroirs.

Selon un exemple, les axes normaux des deux miroirs de l'élément de calibration forment un angle de 90 degrés entre eux.

Selon un exemple, l'élément de calibration comprend un miroir présentant une surface courbe et un prisme surmontant le miroir, ledit prisme présentant deux faces supérieures inclinées l'une par rapport à l'autre, l'élément de calibration étant configuré de sorte que le faisceau lumineux transmis par la fibre optique d'injection soit réfracté par l'une des faces supérieures vers le centre de la surface courbe du miroir, puis réfléchi sur le miroir vers l'autre des faces supérieures, pour être ensuite réfracté vers la fibre optique de collection.

Ce troisième mode de réalisation du système de mesure est également adapté à la configuration parallèle des fibres optiques d'injection et de collection. Ce troisième mode de réalisation est avantageux dans le cas d'un circuit photonique intégré dans un substrat fin, dans lequel la fabrication de deux miroirs présentant des axes normaux formant un angle de 90 degrés entre eux est compliquée. L'ajout d'un prisme dans l'élément de calibration permet de transmettre le faisceau lumineux de la fibre optique d'injection à la fibre optique de collection à l'aide d'un seul miroir dont l'axe normal est perpendiculaire au plan d'extension principal du substrat sous-jacent. Le prisme permet de rediriger le faisceau lumineux vers le centre de la surface courbe du miroir.

Selon un exemple, l'élément de calibration est directement intégré sur le même substrat que le circuit photonique.

Selon un exemple, l'élément de calibration est intégré sur un substrat de calibration différent et séparé du substrat du circuit photonique.

Le substrat de calibration dédié uniquement à la calibration du système, permet une flexibilité en termes de fabrication de l'élément de calibration, des dimensions de l'élément de calibration et de l'inclinaison des axes normaux des miroirs. Les contraintes imposées par l'intégration du circuit photonique et de l'élément de calibration sur le même substrat sont ainsi contournées.

Selon un exemple, les pertes d'insertions absolues $IL_{cp}$ du circuit photonique sont déterminées à partir de la puissance optique de caractérisation $P_{cp}$, la puissance optique de calibration $P_{rm}$ et la perte d'insertion $IL_{mir}$ de l'élément de calibration, telles que : $IL_{cp} = IL_{mir} + P_{rm} - P_{cp}$.

La puissance optique de caractérisation $P_{cp}$ et la puissance optique de calibration $P_{rm}$ sont typiquement exprimées en décibels-milliwatt (dBm). La puissance optique de caractérisation $P_{cp}$ est typiquement mesurée après le circuit photonique. La puissance optique de calibration $P_{rm}$ est typiquement mesurée après le dispositif de calibration.

Dans le cadre de la présente invention, la propagation d'un faisceau lumineux entre un premier élément optique et un deuxième élément optique, signifie que le faisceau peut être acheminé depuis le premier élément optique jusqu'au deuxième élément optique ou inversement que le faisceau peut être acheminé depuis le deuxième élément optique jusqu'au premier élément optique. Le faisceau lumineux se propage typiquement selon un trajet, une direction de propagation ou un chemin optique.

Dans le cadre de la présente invention, un objet ou un matériau « transparent » signifie que l'objet ou le matériau laisse passer au moins 90% de l'intensité lumineuse du faisceau lumineux.

Dans le cadre de la présente demande, on entend par « pertes d'insertion » la diminution de la puissance lumineuse d'un faisceau lumineux se propageant dans un système optique, qui se produit lorsqu'un composant optique tel qu'un coupleur à réseaux de diffraction, un miroir ou un connecteur de fibre est inséré dans le trajet du faisceau lumineux. Ces pertes peuvent être causées par l'absorption, la diffusion, la réflexion ou la dispersion de la lumière lorsqu'elle traverse le composant optique.

Le terme « réflexion » ou ses équivalents se réfère au phénomène de réémission depuis une surface d'un faisceau lumineux incident, selon une ou plusieurs directions présentant des sens opposés à la direction incidente. Dans la présente description, une surface est considérée comme réfléchissante dès lors qu'elle réémet au moins 85% de l'intensité d'un faisceau lumineux incident. La réflexion peut être spéculaire (une direction de réflexion), ou diffuse (plusieurs directions de réflexion).

On entend par un substrat, une couche, un dispositif, « à base » d'un matériau M, un substrat, une couche, un dispositif comprenant ce matériau M uniquement ou ce matériau M et éventuellement d'autres matériaux, par exemple des éléments d'alliage, des impuretés ou des éléments dopants.

Un repère, de préférence orthonormé, comprenant les axes x, y, z dirigés selon les première, deuxième et troisième directions est représenté sur les figures annexées.

Dans la présente demande de brevet, on parlera préférentiellement d'épaisseur pour une couche et de hauteur pour une structure ou un dispositif. L'épaisseur est prise selon une direction normale au plan d'extension principal de la couche, et la hauteur est prise perpendiculairement au plan basal xy du substrat. Ainsi, une couche présente typiquement une épaisseur selon z, et un coeur de guide d'onde présente une hauteur selon z. Les termes relatifs « sur », « surmonte », « sous », « sous-jacent » se réfèrent à des positions prises selon la direction z.

Les valeurs dimensionnelles s'entendent aux tolérances de fabrication et de mesure près.

Les termes « sensiblement », « environ », « de l'ordre de » signifient, lorsqu'ils se rapportent à une valeur, « à 10% près » de cette valeur ou, lorsqu'ils se rapportent à une orientation angulaire, « à 10° près » de cette orientation. Ainsi, une direction sensiblement normale à un plan signifie une direction présentant un angle de $90 \pm 10°$ par rapport au plan.

Par ailleurs, le terme « étape » ne signifie pas obligatoirement que les actions menées durant une étape soient simultanées ou immédiatement successives. Certaines actions d'une première étape peuvent notamment être suivies d'actions liées à une étape différente, et d'autres actions de la première étape peuvent être reprises ensuite. Ainsi, le terme étape ne s'entend pas forcément d'actions unitaires et inséparables dans le temps et dans l'enchaînement des phases du procédé.

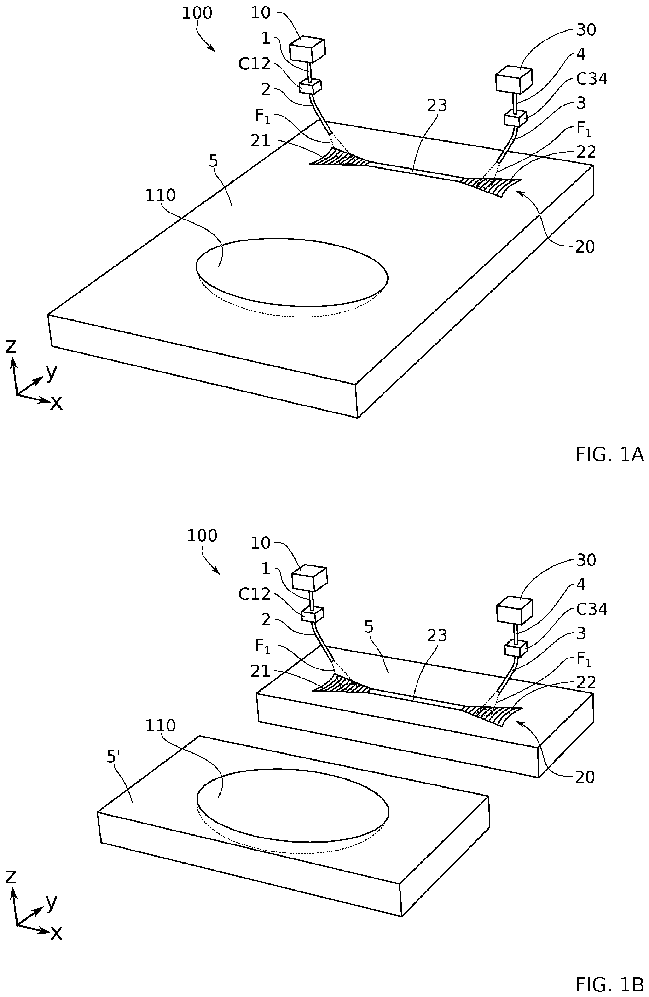

Le système 100 de mesure de pertes d'insertion dans un circuit photonique 20 est maintenant décrit en référence aux figures 1A et 1B.

Comme illustré à la figure 1A, le système 100 est configuré pour mesurer les pertes d'insertion d'un circuit photonique 20 intégré sur un substrat S. Le substrat S s'étend dans un plan xy défini par une direction x et une direction y perpendiculaire à la direction x.

Le circuit photonique 20 comprend au moins un guide d'onde 23 et présente une interface d'entrée 21 et une interface de sortie 22 couplées au guide d'onde 23. L'interface d'entrée 21 est configurée pour recevoir un faisceau lumineux F et le diriger vers le guide d'onde 23 du circuit photonique 20. Le faisceau lumineux F est guidé par le guide d'onde 23 vers l'interface de sortie 22. L'interface de sortie 22 est configurée pour recevoir le faisceau lumineux F et le diriger en dehors du circuit photonique 20, vers un autre composant optique tel qu'une fibre par exemple.

Afin de caractériser ce circuit photonique 20, il est important de mesurer les pertes d'insertion absolues $IL_{cp}$ du circuit photonique 20. Le système 100 permet de mesurer ces pertes d'insertion absolues $IL_{cp}$ à l'aide d'un circuit à base de fibres optiques connectées entre elles par des connecteurs de fibres. Le système 100 comprend une source de lumière 10 émettant le faisceau lumineux F, un détecteur 30, une fibre optique d'injection 2 et une fibre optique de collection 3. La fibre optique d'injection 2 est configurée pour transmettre le faisceau lumineux F vers l'interface d'entrée 21 du circuit photonique 20 et la fibre optique de collection 3 est configurée pour collecter le faisceau lumineux F provenant de l'interface de sortie 22 du circuit photonique 20. Les fibres optiques d'injection 2 et de collection 3 sont de préférence alignées relativement à l'interface d'entrée 21 et de sortie 23, de façon à transmettre le faisceau lumineux F vers l'interface d'entrée 21 et collecter le faisceau lumineux F provenant de l'interface de sortie 22 en minimisant les pertes optiques de transmission. Les fibres optiques d'injection 2 et de collection 3 peuvent être alignées dans un même plan non parallèle au plan xy, de sorte que leurs axes se croisent en formant un angle non nul, ou de sorte que leurs axes soient parallèles.

Le système 100 comprend en outre une première fibre optique 1 liée à la source de lumière 10 à une extrémité, et connectée à la fibre d'injection 2 à l'autre extrémité à l'aide d'un premier connecteur C12. Cette première fibre optique 1 est configurée pour transmettre le faisceau lumineux F émis par la source de lumière 10 vers le premier connecteur C12 de fibres. Le premier connecteur C12 transmet alors le faisceau lumineux vers la fibre optique d'injection 2. Le système 100 comprend également une deuxième fibre optique 4 liée au détecteur 30 et connectée à la fibre optique de collection 3 à l'aide d'un deuxième connecteur C34. La deuxième fibre optique 4 est configurée pour transmettre, via le deuxième connecteur C34 de fibres, le faisceau lumineux F collecté par la fibre optique de collection 3 vers le détecteur 30. Le détecteur 30 est configuré pour mesurer la puissance optique du faisceau lumineux F transmis par la deuxième fibre optique 4. Cette puissance optique peut être exprimée en décibel-milliwatt (dBm) pour faciliter les calculs destinés à extraire les pertes d'insertion absolues $IL_{cp}$. Les premier et deuxième connecteurs C12, C34 de fibres présentent respectivement une première perte d'insertion $IL_{C12}$ et une deuxième perte d'insertion $IL_{C34}$. Les connecteurs de fibres étant des éléments passifs, les pertes d'insertion associées sont positives. Ces pertes d'insertion $IL_{C12}$, $IL_{C34}$ sont dues au raccordement des fibres et peuvent varier en fonction de la propreté des surfaces de contact par exemple ou de l'alignement imparfait des fibres raccordées.

Le système 100 comprend en outre un élément de calibration 110 comme illustré à la figure 1A. L'élément de calibration 110 présente une perte d'insertion $IL_{mir}$ fixe et connue précisément. Le système 100 est configuré pour mesurer les pertes d'insertions absolues $IL_{cp}$ du circuit photonique 20 après une calibration du système 100 via l'élément de calibration 110.

L'élément de calibration 110 peut être intégré sur le même substrat S que le circuit photonique 20, comme illustré à la figure 1A, ou peut être intégré sur un substrat différent dit substrat de calibration S', dédié à la calibration du système 100, comme illustré à la figure 1B.

Afin de caractériser les pertes d'insertion absolues $IL_{cp}$ du circuit photonique 20, une puissance optique de caractérisation $P_{cp}$ du faisceau lumineux F transmis par la deuxième fibre optique 4 est mesurée par le détecteur 30 dans une configuration de caractérisation des pertes d'insertion absolues $IL_{cp}$ décrite précédemment en référence aux figures 1A, 1B. Le faisceau lumineux F émis par la source de lumière 10 se propage dans la première fibre optique 1 avec une intensité initiale notée I1. La puissance optique initiale P1 du faisceau lumineux F se propageant dans la première fibre optique 1 peut être exprimée en dBm en fonction de l'intensité initiale I1 sous la forme suivante :

$$P1 = 10 \times \log\left(\frac{I1\ (mW)}{1\ mW}\right)$$

La puissance optique de caractérisation $P_{cp}$ du faisceau lumineux F transmis par la deuxième fibre optique 4 dans la configuration de caractérisation des pertes d'insertion absolues $IL_{cp}$ du circuit photonique 20 peut être exprimée sous la forme suivante :

$$P_{cp} = P1 - IL_{C12} - IL_{cp} - IL_{C34}$$

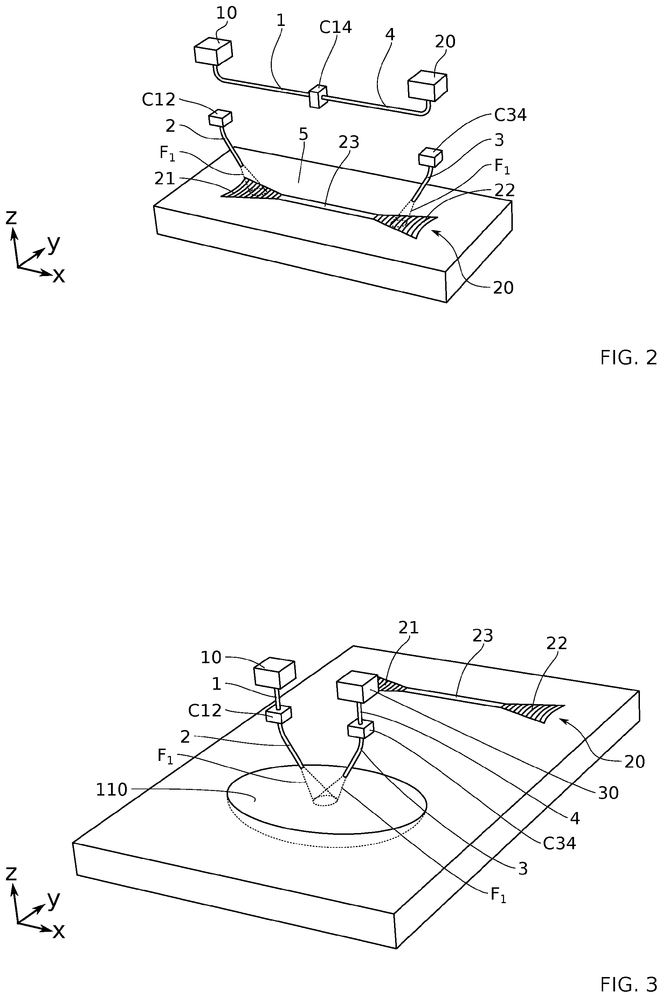

La puissance optique initiale P1 du faisceau lumineux F se propageant dans la première fibre optique 1 ne peut pas être mesurée directement dans la configuration de caractérisation décrite précédemment. Pour cette raison, dans les systèmes de mesure des pertes d'insertion conventionnels, une puissance de référence $P_{rf}$ est mesurée dans une configuration de référence illustrée à la figure 2. Dans cette configuration de référence, la première fibre optique 1 est débranchée du premier connecteur C12 de fibres, la deuxième fibre optique 4 est également débranchée du deuxième connecteur C34 de fibres, et les première et deuxième fibres optiques 1, 4 sont connectées l'une à l'autre à l'aide d'un troisième connecteur C14 de fibres présentant une troisième perte d'insertion $IL_{C14}$. Cette puissance optique de référence peut être exprimée sous la forme suivante :

$$P_{rf} = P1 - IL_{C14}$$

Des pertes d'insertion approximatives $IL_{rf}$ du circuit photonique 20 peuvent ainsi être extraites en calculant la différence entre la puissance de référence $P_{rf}$ mesurée et la puissance de caractérisation $P_{cp}$ mesurée, tel que :

$$IL_{rf} = P_{rf} - P_{cp}$$

Nous déduisons à partir des équations précédentes la relation entre les pertes d'insertions approximatives $IL_{rf}$ et les pertes d'insertion absolues $IL_{cp}$, exprimée sous la forme suivante :

$$IL_{rf} = IL_{cp} - IL_{C14} + IL_{C12} + IL_{C34}$$

La valeur des pertes d'insertion absolues $IL_{cp}$ ne peut pas ainsi être obtenue d'une manière fiable et précise. En effet, en suivant cette approche conventionnelle, on aboutit à des pertes d'insertions approximatives $IL_{rf}$ dépendant des pertes d'insertion $IL_{C14}$, $IL_{C12}$, $IL_{C34}$ des connecteurs C14, C12, C34 de fibres, qui constituent une source d'incertitude dans la mesure des pertes d'insertion.

Les pertes d'insertion $IL_{Cij}$ d'un connecteur Cij de fibres varient d'une connexion à l'autre. Les pertes d'insertion $IL_{Cij}$ sont typiquement inférieures à 0,5 dB, et en moyenne égales à 0,2 dB. L'écart-type des valeurs mesurées des pertes d'insertion $IL_{Cij}$ d'un connecteur Cij de fibres est de l'ordre de 0,2 dB. Nous déduisons que les pertes d'insertions approximatives $IL_{rf}$ sont en moyenne supérieures aux pertes d'insertion absolues $IL_{cp}$, ce qui peut être symboliquement exprimé comme suit : $IL_{cp} \simeq IL_{rf}$ - 0,2 dB $\pm$ 0,2 dB.

L'introduction de l'élément de calibration 110 au système 100 de mesures des pertes d'insertion absolues $IL_{cp}$, permet d'éliminer dans les calculs des pertes d'insertions $IL_{C14}$, $IL_{C12}$, $IL_{C34}$ des connecteurs C14, C12, C34 de fibres. La perte d'insertion $IL_{mir}$ de l'élément de calibration 110 est fixe et peut être mesurée précisément, ce qui permet de calibrer le système 100 de mesure de manière fiable.

La figure 3 illustre le système 100 dans une configuration de calibration à l'aide de l'élément de calibration 110. Dans cette configuration de calibration, la fibre optique d'injection 2 est configurée pour transmettre le faisceau lumineux F vers l'élément de calibration 110. L'élément de calibration 110 est configuré pour recevoir le faisceau lumineux F et réfléchir le faisceau lumineux F vers la fibre optique de collection 3, qui collecte le faisceau lumineux F réfléchi par l'élément de calibration 110. Cela permet de mesurer à l'aide du détecteur 30, une puissance optique de calibration $P_{rm}$ du faisceau lumineux F reçu et réfléchi par l'élément de calibration 110. Cette puissance optique de calibration $P_{rm}$ peut être exprimée sous la forme suivante :

$$P_{rm} = P1 - IL_{C12} - IL_{mir} - IL_{C34}$$

Une différence de pertes ∆IL peut être déduite en calculant la différence entre la puissance de calibration $P_{rm}$

mesurée et la puissance de caractérisation $P_{cp}$ mesurée, tel que :

$$\Delta IL = P_{rm} - P_{cp}$$

Les pertes d'insertion absolues $IL_{cp}$ du circuit photonique 20 peuvent être extraites à partir des équations précédentes, et sont exprimées sous la forme suivante :

$$IL_{cp} = IL_{mir} + \Delta IL$$

Les pertes d'insertion $IL_{C14}$, $IL_{C12}$, $IL_{C34}$ des connecteurs C14, C12, C34 de fibres sont ainsi éliminées du calcul du fait que le circuit de fibres reste inchangé en passant de la configuration de caractérisation à la configuration de calibration via l'élément de calibration 110. En d'autres termes, les première et deuxième fibres optiques 1, 4, ne sont pas branchées/débranchées pour passer d'une configuration à l'autre.

Comme illustré à la figure 3, l'élément de calibration comprend au moins un miroir 111 présentant une surface courbe ellipsoïdale. Cette surface courbe ellipsoïdale permet de réfléchir le faisceau lumineux F de la fibre optique d'injection 2 vers la fibre optique de collection 3 tout en focalisant et dirigeant le faisceau lumineux F vers la fibre optique de collection 3. Lors de cette réflexion du faisceau lumineux F sur la surface courbe du miroir 111, une perte d'insertion $IL_{mir}$ se produit. Cette perte d'insertion $IL_{mir}$ associée à l'élément de calibration 110 dépend des dimensions, de la forme et de la nature de la surface courbe du miroir 111.

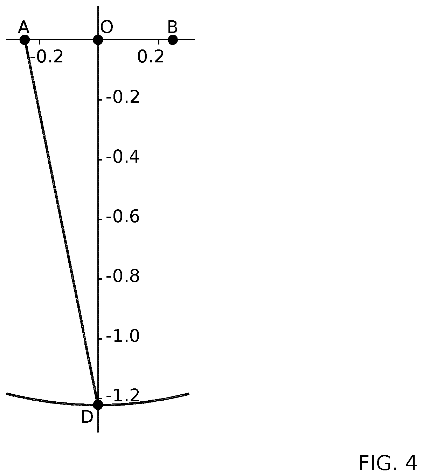

Les dimensions du miroir 111 sont de préférence choisies par rapport à la position et au type des fibres optiques d'injection et de collection 2, 3, afin d'optimiser la transmission du faisceau lumineux F d'une fibre à l'autre. La direction de propagation du faisceau lumineux F incident sur la surface du miroir 111 et réfléchi sur le miroir 111, ainsi que l'axe normal du miroir 111 sont compris dans un même plan qui n'est pas parallèle au plan xy. Comme illustré à la figure 4, la position de l'extrémité de la fibre optique d'injection 2 est notée A, la position de l'extrémité de la fibre optique de collection 3 est notée B, la position du fond de la surface ellipsoïdale du miroir 111 est notée D et l'axe normal du miroir 111 est la droite (DO), O étant le milieu du segment reliant les points A et B. Le faisceau lumineux F se propage suivant la direction AD à la sortie de la fibre optique d'injection 2. Il est ensuite réfléchi sur la surface du miroir 111 et suit la direction DB après la réflexion pour être ensuite collecté par la fibre optique de collection 3.

Les dimensions de la surface ellipsoïdale du miroir 111 peuvent être calculées en considérant une surface ellipsoïdale du miroir 111. Une forme plus précise peut être déterminée à l'aide d'une simulation optique, par exemple en utilisant le logiciel Zemax avec le module POP (« Physical Optics Propagation » en anglais). Cependant, pour le raisonnement ci-après, nous considérons une surface courbe ellipsoïdale idéale. Les paramètres permettant de déterminer les dimensions de la surface courbe du miroir 111 comprennent :

- la distance de travail AB entre la fibre optique de collection 2 et la fibre optique d'injection 3 prise entre les points A et B, cette distance de travail AB peut être de préférence égale ou inférieure à 1 mm,
- l'angle $\alpha$ du faisceau lumineux F par rapport à une direction z perpendiculaire aux directions x et y, d'une valeur typique $\alpha$ = 11,6° pour le test des composants photoniques intégrés,
- la hauteur de travail H des fibres optiques d'injection et de collection 2, 3, par rapport au fond de la surface ellipsoïdale, prise entre les points O et D, telle que H = OD = AB/(2*tan($\alpha$)),
- la distance L entre l'extrémité d'une fibre optique 2, 3, et le fond de la surface ellipsoïdale, prise entre les points A ou B et D, telle que L = AD = BD = AB/(2*sin($\alpha$)),
- le rayon de courbure Rx de la surface ellipsoïdale au point D, pris selon la direction x (parallèle à AB), tel que Rx = L*(1 - (AB/(2L))$^2$)$^{-1/2}$,
- le rayon de courbure Ry de la surface ellipsoïdale au point D, pris selon la direction y (perpendiculaire au plan ABD), tel que Ry = H,
- la longueur d'onde $\lambda$ du faisceau lumineux F,
- le diamètre du mode de propagation MFD du faisceau lumineux F dans la fibre optique 2, 3, diamètre évalué à 1/e$^2$ en intensité (MFD ou « Mode Field Diameter » en anglais),
- la longueur de Rayleigh zR du faisceau lumineux F dans l'air, telle que zR = $\pi$*(MFD/2)$^2$/$\lambda$,
- la divergence $\theta$ totale à 1/e$^2$ du faisceau lumineux F à la sortie de la fibre optique 2, 3, telle que $\theta$ = MFD/zR,
- le diamètre W du mode de propagation du faisceau lumineux F à 1/e$^2$ sur la surface courbe du miroir 111, telle que W = H*$\theta$.

Les fibres optiques d'injection et de collection 2, 3, peuvent être des fibres standards largement utilisées dans le domaine des télécommunications, comme des fibres Corning SMF-28 par exemple. La longueur d'onde $\lambda$ du faisceau lumineux F peut être choisie dans la gamme des longueurs d'ondes du proche infrarouge, qui sont couramment utilisées dans les réseaux de télécommunications. La longueur d'onde λ du faisceau lumineux F peut être par exemple autour de 1,310 μm.

Le tableau ci-dessous résume les paramètres utilisés pour calculer les dimensions du miroir 111. Ce tableau présente également des exemples de valeurs choisies selon un exemple de réalisation du système 100, pour des fibres compatibles avec les réseaux de télécommunications.

Tableau 1

| Paramètre | Valeur |
|---|---|
| Distance de travail AB entre les fibres optiques d'injection et de collection | AB = 0,5 mm |
| Angle α du faisceau lumineux F par rapport à la direction z | α = 11,6° |
| Hauteur de travail H des fibres optiques d'injection et de collection | H = 1,22 mm |
| Distance L entre l'ouverture d'une fibre optique et le fond de l'ellipsoïde | L = 1,25 mm |
| Rayon de courbure Rx au point D selon la direction x | Rx = 1,27 mm |
| Rayon de courbure Ry au point D selon la direction y | Ry = 1,22 mm |
| Indice de réfraction n de la silice | n = 1,447 |
| Longueur d'onde λ du faisceau lumineux | λ = 1,310 μm |
| Diamètre du mode de propagation MDF du faisceau lumineux F dans la fibre optique | MDF = 9,2 μm |
| Longueur de Rayleigh zR du faisceau lumineux | zR = 50,7 μm |
| Divergence θ totale à $1/e^2$ du faisceau lumineux | θ = 10,4° |
| Diamètre W du faisceau lumineux à $1/e^2$ sur la surface courbe du miroir | W = 0,22 mm |

Le diamètre $D_{mir}$ du miroir 111 est choisi de sorte qu'il soit suffisamment large pour permettre de réfléchir la totalité du faisceau lumineux F, par exemple tel que $D_{mir} = 1.6*W$. Le diamètre $D_{mir}$ du miroir 111 peut être ainsi égal à 0,35 mm. La profondeur $h_{mir}$ de la surface ellipsoïdale du miroir 111 prise selon l'axe normal du miroir est telle que $h_{mir} = D^2/(8*Ry)$. La profondeur $h_{mir}$ de la surface ellipsoïdale du miroir 111 peut être ainsi égale à 13 μm.

La perte d'insertion $IL_{mir}$ du miroir 111 peut être calculée à partir de l'équation suivante :

$$IL_{mir} = 2 \times IL_{interf} + IL_{bord} + IL_{met} + IL_{surf}$$

Dans cette équation, $IL_{interf}$ représente la perte due à une réflexion partielle du faisceaux lumineux F sur l'interface air/verre de la fibre optique 2, 3, $IL_{bord}$ représente la perte due à la limitation du faisceau lumineux F au bord du miroir 111, $IL_{met}$ représente la perte due au coefficient de réflexion du métal de la surface ellipsoïdale qui peut être légèrement inférieur à 1, et $IL_{surf}$ représente la perte due aux imperfections de la surface ellipsoïdale du miroir 111.

Le coefficient de réflexion R à l'interface air/verre de la fibre optique d'injection 2 ou la fibre optique de collection 3 est tel que $R = ((n-1)/(n+1))^2$ et peut être égal à 3.3 % pour un indice de réfraction de la silice $(SiO_2)$ n = 1,447. La transmission $T_{interf}$ pour chaque interface air/verre est telle que $T_{interf} = 1 - R$ et peut être égale à 96,7 % ce qui correspond à une perte $IL_{interf}$ de 0,15 dB.

Le taux de transmission $T_{bord}$ du faisceau lumineux F limité par le bord du miroir 111 dépend du diamètre $D_{mir}$ du miroir 111, tel que $T_{bord} = 1 - exp(-2 (D_{mir}/W)^2)$. Le taux de transmission $T_{bord}$ peut être par exemple égal à 99,4 % pour les exemples de valeurs de $D_{mir}$ et de W précédents, ce qui correspond à une perte $IL_{bord}$ de l'ordre de 0,03 dB.

La surface ellipsoïdale du miroir 111 peut être couverte d'une couche métallique, comme une couche d'aluminium par exemple. Pour une épaisseur de la couche d'aluminium autour de 200 nm, le coefficient de réflexion $R_{met}$ de la surface ellipsoïdale du miroir 111 est autour de 96,6 %, ce qui correspond à une perte $IL_{met}$ de l'ordre de 0,14 dB.

Lors de la fabrication du miroir 111, plusieurs facteurs peuvent entraîner des déviations par rapport à une forme ellipsoïdale idéale. Les tolérances de fabrication et les déformations mécaniques sont autant de facteurs qui peuvent contribuer à des imperfections dans la forme de la surface courbe du miroir 111. Le taux de transmission $T_{surf}$ dans la fibre optique de collection 3 dû à ces imperfections de la surface courbe est tel que $T_{surf} = exp(-(4\pi*\Delta\delta/\lambda)^2)$, $\Delta\delta$ étant l'écart quadratique moyen entre la surface courbe ellipsoïdale et une surface ellipsoïdale idéale. L'écart quadratique moyen $\Delta\delta$ vis-à-vis de la forme ellipsoïdale idéale peut être mesuré précisément à l'aide d'un profilomètre, par exemple un profilomètre optique qui permet d'obtenir une mesure précise à l'échelle nanométrique (< 5 nm). Grâce à cette mesure de l'écart quadratique moyen $\Delta\delta$, les pertes $IL_{surf}$ peuvent être déterminées.

Les technologies de fabrication actuelles permettent d'obtenir un écart quadratique moyen $\Delta\delta$ vis-à-vis de la forme ellipsoïdale idéale inférieur à 30 nm. La forme ellipsoïdale peut être fabriquée par exemple en photolithographie à niveaux de gris et peut présenter typiquement un écart quadratique moyen $\Delta\delta$ inférieur à 20 nm. Dans le tableau suivant, quelques exemples de valeurs de $IL_{surf}$ sont présentés, en fonction de l'écart quadratique moyen $\Delta\delta$.

Tableau 2

| $\Delta\delta$ | $T_{surf}$ | $IL_{surf}$ |
|---|---|---|
| 30 nm | 92,1 % | 0,36 dB |
| 20 nm | 96,4 % | 0,16 dB |
| 10 nm | 99,1 % | 0,04 dB |

La perte d'insertion $IL_{mir}$ du miroir 111 peut ainsi être calculée en fonction des paramètres décrits précédemment. Pour un écart quadratique moyen $\Delta\delta$ = 20 nm, $IL_{mir}$ peut être par exemple de l'ordre de 0,62 dB $\pm$ 0,1 dB, où on a considéré une incertitude de 5 nm sur la mesure de $\Delta\delta$.

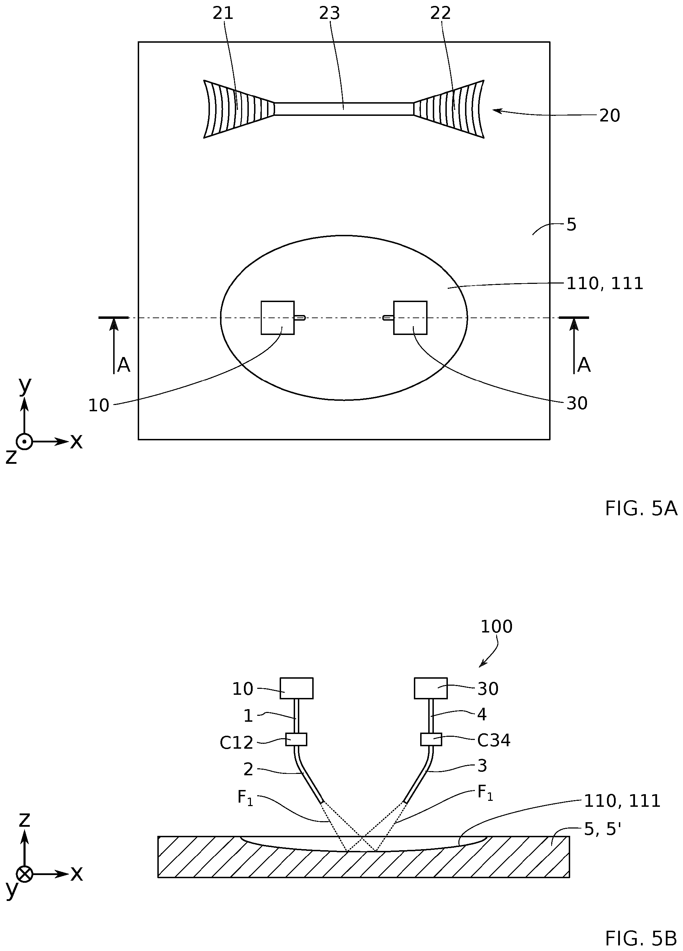

Comme illustré aux figures 5A et 5B, selon un premier mode de réalisation du système 100, l'élément de calibration 110 peut comprendre un seul miroir 111 avec un axe normal parallèle à la direction z. Cet élément de calibration 110 à miroir 111 unique peut être utilisé pour calibrer un système 100 dans lequel l'axe de la fibre optique d'injection 2 et celui de la fibre optique de collection 3 sont croisés comme illustré à la figure 5B selon un exemple de réalisation. Cette configuration croisée des fibres optiques d'injection 2 et de collection 3 peut être adoptée dans le cas où les interfaces d'entrée 21 et de sortie 22 du circuit photonique 20 sont disposées l'une en regard de l'autre comme illustré à la figure 5A. Selon ce premier mode de réalisation, le faisceau lumineux F transmis par la fibre optique d'injection 2 est directement réfléchi sur le miroir 111 vers la fibre optique de collection 3.

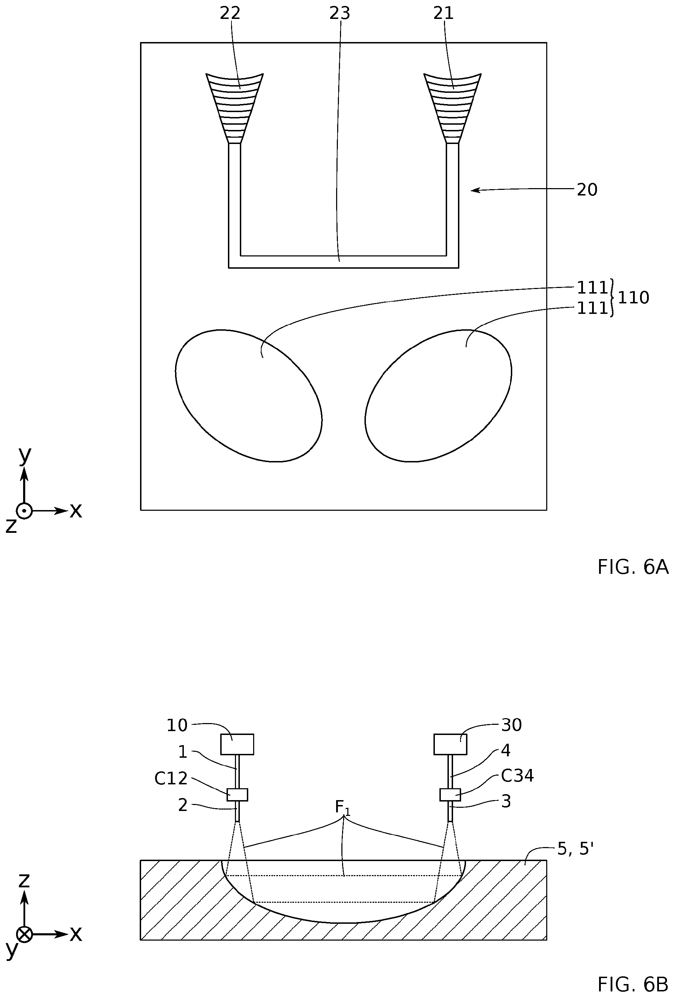

Comme illustré aux figures 6A et 6B, selon un deuxième mode de réalisation du système 100, l'élément de calibration 110 peut comprendre une paire de miroirs 111 présentant chacun une surface courbe parabolique. Selon ce deuxième mode de réalisation, les deux miroirs 111 sont inclinés par rapport à la surface du substrat S ou du substrat de calibration S', afin que le faisceau lumineux F transmis par la fibre optique d'injection 2 soit réfléchi par l'un des deux miroirs 111 vers l'autre puis réfléchi par l'autre des deux miroirs 111 vers la fibre optique de collection 3, comme illustré à la figure 6B.

Cet élément de calibration 110 à double miroirs 111 peut être utilisé pour calibrer un système 100 dans lequel l'axe de la fibre optique d'injection 2 et celui de la fibre optique de collection 3 sont parallèles comme illustré à la figure 6B selon un exemple de réalisation. Cette configuration parallèle des fibres optiques d'injection 2 et de collection 3 peut être adoptée dans le cas où les interfaces d'entrée 21 et de sortie 22 du circuit photonique 20 sont disposées parallèlement l'une à l'autre comme illustré à la figure 6A.

Afin de permettre une transmission efficace du faisceau lumineux F d'une fibre à l'autre, les axes normaux des deux miroirs 111 peuvent être avantageusement orientés de sorte que les deux axes forment un angle de 90° entre eux selon un exemple de réalisation. Autrement dit, les deux miroirs 111 peuvent être inclinés de 45° par rapport à la surface du substrat S ou du substrat de calibration S'. Selon cet exemple de réalisation, le substrat de calibration S' dédié uniquement à la calibration du système 100, permet une flexibilité en termes de fabrication de l'élément de calibration 110, des dimensions de l'élément de calibration 110 et de l'inclinaison des axes normaux des miroirs 111. En effet, les circuits photoniques 20 sont généralement intégrés sur des substrats S présentant des épaisseurs fines, ce qui pourrait ne pas être optimal pour la fabrication de miroirs 111 inclinés par rapport à la surface du substrat. Les contraintes imposées par l'intégration du circuit photonique 20 et de l'élément de calibration sur le même substrat S peuvent être contournées en intégrant les miroirs 111 sur un substrat de calibration S', séparément du circuit photonique 20.

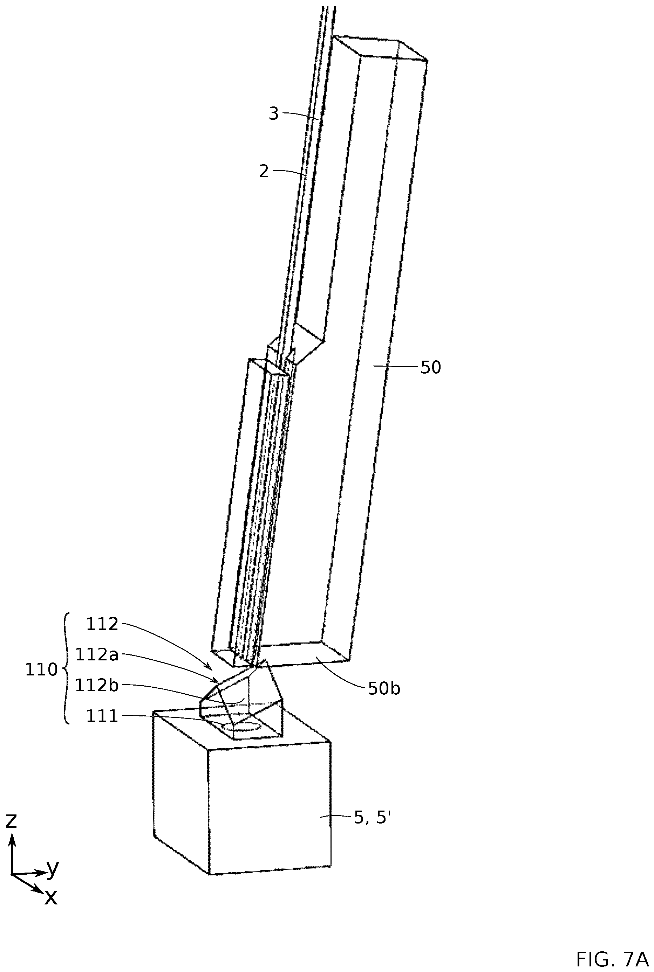

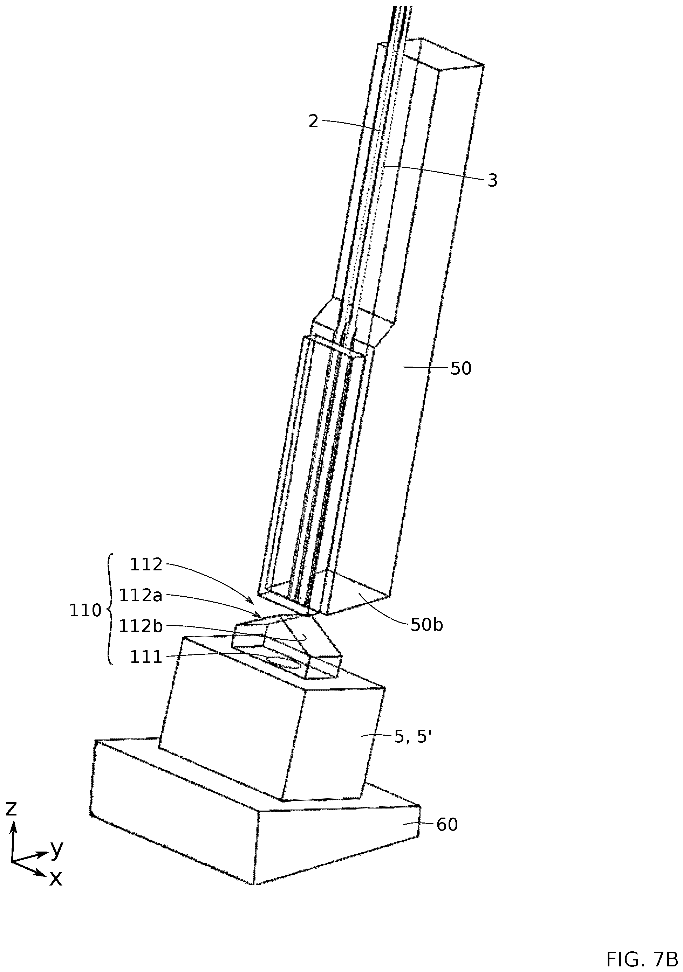

Comme illustré aux figures 7A et 7B, selon un troisième mode de réalisation du système 100, l'élément de calibration 110 peut comprendre un seul miroir 111 et un prisme 112 surmontant le miroir 111. Le prisme 112 présente deux faces supérieures 112a, 112b inclinées l'une par rapport à l'autre. Selon ce troisième mode de réalisation, l'élément de calibration 110 est configuré de sorte que le faisceau lumineux F transmis par la fibre optique d'injection 2 soit réfracté par la face supérieure 112a vers le centre de la surface courbe du miroir 111, puis réfléchi sur le miroir 111 vers la face supérieure 112b, pour être ensuite réfracté vers la fibre optique de collection 3 par la face supérieure 112b. Cet élément de calibration 110 comprenant le prisme 112 peut être utilisé pour calibrer un système 100 dans lequel les fibres optiques d'injection 2 et de collection 3 sont disposées dans une configuration parallèle « rapprochée », où les fibres optiques 2, 3 sont à proximité immédiate l'une de l'autre.

Ce troisième mode de réalisation du système de mesure est donc plus particulièrement adapté à la configuration parallèle rapprochée. Il est également avantageux dans le cas d'un circuit photonique 20 intégré dans un substrat S fin, dans lequel la fabrication de deux miroirs 111 présentant des axes normaux formant un angle de 90° entre eux est compliquée. L'introduction d'un prisme 112 dans l'élément de calibration 110, au-dessus du miroir 111, permet de transmettre le faisceau lumineux F de la fibre optique d'injection 2 à la fibre optique de collection 3 à l'aide d'un seul miroir 111 dont l'axe normal est perpendiculaire au substrat sous-jacent. Le faisceau lumineux F est avantageusement redirigé vers le centre de la surface courbe du miroir 111 par le prisme 112.

Selon un premier exemple illustré à la figure 7A, les fibres optiques d'injection 2 et de collection 3, peuvent être disposées parallèlement l'une à l'autre sur une barrette 50 servant de support aux fibres. La barrette 50 peut être configurée de sorte que les fibres optiques d'injection 2 et de collection 3 soient inclinées par rapport à la direction z d'un angle de l'ordre de 8°. La face inférieure 50b de la barrette 50 peut être parallèle à la surface du substrat S ou du substrat de calibration S', qui dans cet exemple est parallèle au plan xy. Selon ce premier exemple, le plan tangent du miroir 111 est parallèle à la surface du substrat S ou du substrat de calibration S'. Selon cet exemple, les faces supérieures 112a, 112b du prisme 112 peuvent être penchées, de sorte que l'arête sommitale du prisme 112 est inclinée vis-à-vis de la surface du substrat S ou celle du substrat de calibration S'. L'angle formé entre les deux faces supérieures 112a, 112b du prisme 112 peut être de préférence choisi de sorte que les directions de propagation du faisceau lumineux F à l'intérieur du prisme 112, avant et après la réflexion sur le miroir 111, soient comprises dans un plan vertical parallèle au plan (xz) contenant l'axe du miroir 111.

Selon un deuxième exemple illustré à la figure 7B, les fibres optiques d'injection 2 et de collection 3, peuvent également être disposées parallèlement l'une à l'autre sur la barrette 50. La barrette 50 peut être configurée de sorte que les fibres optiques d'injection 2 et de collection 3 soient inclinées par rapport à la direction z d'un angle de 8°. La face inférieure 50b de la barrette 50 peut être parallèle au plan xy. Selon ce deuxième exemple, l'axe normal du miroir 111 est perpendiculaire à la surface du substrat S ou du substrat de calibration S', l'arête sommitale du prisme 112 est parallèle à la surface du substrat S ou celle du substrat de calibration S'.

Afin que l'axe normal du miroir 111 soit compris dans le plan formé par les directions de propagation du faisceau lumineux F se propageant à l'intérieur du prisme 112, avant et après la réflexion sur le miroir 111, une cale 60 présentant une surface inclinée par rapport au plan xy peut être introduite en dessous du substrat S ou du substrat de calibration S'. Cette cale 60 permet d'incliner la surface S ou S' de sorte qu'elle soit perpendiculaire au plan contenant l'axe du faisceau issu de la fibre 2 et l'axe du faisceau reçu par la fibre 3. La surface de la cale 60 est, dans cet exemple, inclinée de 11,6° par rapport au plan xy. La surface de la cale 60 peut être avantageusement orientée par rapport au plan xy, avec une précision plus fine que 1 arcmin, soit 0,017°.

Dans les deux exemples de réalisation décrits précédemment, l'assemblage du prisme 112 au miroir 111 peut se faire à l'aide d'une colle polymérisable sous lumière ultraviolette. Les faces du prisme 112 peuvent être avantageusement orientées l'une par rapport à l'autre avec une précision plus fine que 0,017°. L'assemblage du prisme 112 et du miroir 111 peut être de préférence réalisé avec une précision latérale plus fine que 0,5 $\mu$m par rapport au centre de la surface courbe du miroir 111. Le prisme 112 peut être à base de verre de silice ($SiO_2$) par exemple.

Le procédé de mesure des pertes d'insertions absolues $IL_{cp}$ du circuit photonique 20 en utilisant le système 100 est maintenant décrit.

Le procédé comprend une étape de calibration et une étape de mesure. L'étape de calibration comprend une transmission par la première fibre optique 1 couplée à la source de lumière 10, du faisceau lumineux F émis par la source de lumière 10 vers la fibre optique d'injection 2 en passant par le premier connecteur C12 de fibres. Le faisceau lumineux F est ensuite transmis par la fibre optique d'injection 2 vers l'élément de calibration 110. Le faisceau lumineux F est réfléchi par l'élément de calibration 110 vers la fibre optique de collection 3. Le procédé comprend en outre une collection par la fibre optique de collection 3 du faisceau lumineux F provenant de l'élément de calibration 110. Le faisceau lumineux F est ensuite acheminé vers la deuxième fibre optique 4, en passant par le deuxième connecteur C34 de fibres. Le faisceau lumineux F est transmis par la deuxième fibre optique 4 vers le détecteur 30.

Dans cette étape de calibration, une première mesure de la puissance optique de calibration $P_{rm}$ du faisceau lumineux F transmis par la deuxième fibre optique 4, est réalisée à l'aide du détecteur 30. Cette première mesure permet de déterminer ou de prendre en compte les première et deuxième pertes d'insertion $IL_{C12}$, $IL_{C34}$ des premiers et deuxièmes connecteurs C13, C34.

Le procédé comprend en outre, lors d'une étape de mesure, une transmission par la première fibre optique 1 du faisceau lumineux F émis par la source de lumière 10, vers la fibre optique d'injection 2 en passant par le premier connecteur C12 de fibres. Le faisceau lumineux F est ensuite transmis par la fibre optique d'injection 2 vers l'interface d'entrée 21 du circuit photonique 20. La fibre optique de collection 3 collecte ensuite le faisceau lumineux F provenant de l'interface de sortie 22 du circuit photonique 20 et le transmet vers le deuxième connecteur C34. Le faisceau lumineux F passe par le connecteur C34 dans la deuxième fibre optique 4. Le faisceau lumineux F est ensuite transmis par la deuxième fibre optique 4 vers le détecteur 30. Lors de l'étape de mesure, une deuxième mesure par le détecteur 30 de la puissance optique de caractérisation $P_{cp}$ du faisceau lumineux F est réalisée. Cette deuxième mesure permet de déterminer les pertes d'insertion absolues $IL_{cp}$ du circuit photonique 20 en suivant le calcul décrit précédemment.

Selon ce calcul, les pertes d'insertions absolues $IL_{cp}$ du circuit photonique 20 peuvent être déterminées à partir de la puissance optique de caractérisation $P_{cp}$ mesurée lors de l'étape de mesure, la puissance optique de calibration $P_{rm}$ mesurée lors de l'étape de calibration, et la perte d'insertion $IL_{mir}$ de l'élément de calibration 110, par : $IL_{cp} = IL_{mir} + P_{rm} - P_{cp}$.

Le procédé peut comprendre en outre une étape d'alignement des fibres optiques d'injection 2 et de collection 3 selon l'une des configurations de fibres croisées ou parallèles décrites précédemment. Le procédé peut comprend en outre, lors de l'étape de calibration, une ou plusieurs réflexions et/ou plusieurs réfractions du faisceau lumineux F par l'élément de calibration 110.

Selon le premier mode de réalisation du système 100, dans lequel l'élément de calibration comprend un miroir 111 unique, le procédé comprend typiquement une seule réflexion du faisceau F sur la surface courbe du miroir 111 lors de l'étape de calibration.

Selon le deuxième mode de réalisation du système 100, dans lequel l'élément de calibration comprend une paire de miroirs 111, le procédé comprend typiquement deux réflexions du faisceau F sur les surfaces courbes des deux miroirs 111 lors de l'étape de calibration.

Selon le troisième mode de réalisation du système 100, dans lequel l'élément de calibration comprend un miroir 111 unique surmonté d'un prisme, le procédé peut comprendre une réfraction du faisceau lumineux F par l'une des faces supérieures 112a, 112b du prisme 112, une réflexion du faisceau lumineux F sur la surface courbe du miroir F et une deuxième réfraction du faisceau lumineux F par l'autre des faces supérieures 112a, 112b du prisme 112.

L'au moins un miroir 111 de l'élément de calibration peut être intégré sur le même substrat S que le circuit photonique 20, par exemple, par une lithographie à niveaux de gris ou par une nano-impression. Il peut également être réalisé sur le substrat de calibration S' en utilisant des techniques de fabrication éventuellement différentes, comme le tournage à pointe de diamant.

Le circuit photonique 20 peut comprendre plusieurs guides d'ondes 23 et d'autres éléments intégrés comme des coupleurs directionnels par exemple, des transducteurs, des interféromètres ou des miroirs de Bragg. Le substrat S peut être à base de verre, de silicium ou d'autres matériaux. Le substrat de calibration S' peut être à base d'un matériau différent de celui du substrat S.

L'invention n'est pas limitée aux modes de réalisation précédemment décrits. Différents exemples particuliers du système 100 de mesures de pertes d'insertions ont été décrits. D'autres variantes de réalisation sont possibles, par exemple par combinaison de caractéristiques précédemment décrites, sans se départir du principe de la présente invention. En outre, les caractéristiques décrites relativement à un aspect de l'invention peuvent être combinées à un autre aspect de l'invention.

**Revendications**

1. Système (100) de mesure de pertes d'insertion absolues $IL_{cp}$ d'un circuit photonique (20) intégré sur un substrat (S), ledit circuit photonique (20) comprenant au moins un guide d'onde (23), une interface d'entrée (21) et une interface de sortie (22) couplées à l'au moins un guide d'onde (23), l'interface d'entrée (21) étant configurée pour recevoir un faisceau lumineux (F) et le diriger vers l'au moins un guide d'onde (23) et l'interface de sortie (22) étant configurée pour recevoir le faisceau lumineux (F) transmis par l'au moins un guide d'onde (23) et le diriger en dehors du circuit photonique (20), ledit système (100) comprenant :

   • une source de lumière (10) émettant le faisceau lumineux (F),
   • une première fibre optique (1) couplée à la source de lumière (10), configurée pour transmettre le faisceau lumineux (F) vers un premier connecteur (C12) de fibres,
   • une fibre optique d'injection (2) connectée à la première fibre optique (1) à l'aide du premier connecteur (C12) de fibres, ladite fibre optique d'injection (2) étant configurée pour transmettre le faisceau lumineux (F) vers l'interface d'entrée (21) du circuit photonique (20), le premier connecteur (C12) de fibres présentant une première perte d'insertion $IL_{C12}$,
   • une fibre optique de collection (3) configurée pour collecter le faisceau lumineux (F) provenant de l'interface de sortie (22) du circuit photonique (20),
   • une deuxième fibre optique (4) connectée à la fibre optique de collection (3) à l'aide d'un deuxième connecteur (C34) de fibres, la deuxième fibre étant configurée pour transmettre le faisceau lumineux (F) collecté par la fibre optique de collection (3) vers un détecteur (30), le deuxième connecteur (C34) de fibres présentant une deuxième perte d'insertion $IL_{C34}$,
   • le détecteur (30) configuré pour mesurer une puissance optique de caractérisation $P_{cp}$ du faisceau lumineux (F) transmis par la deuxième fibre optique (4),

   ledit système (100) étant **caractérisé en ce qu'**il comprend en outre un élément de calibration (110) présentant une perte d'insertion $IL_{mir}$ fixe et connue, ledit élément de calibration (110) permettant de s'affranchir des première et deuxième pertes d'insertion $IL_{C12}$, $IL_{C34}$, de sorte que le système (100) est configuré pour mesurer les pertes d'insertions absolues $IL_{cp}$ du circuit photonique (20), après calibration du système (100) via l'élément de calibration (110).

2. Système (100) selon la revendication précédente, dans lequel :

• l'élément de calibration (110) est configuré pour recevoir le faisceau lumineux (F) transmis par la fibre optique d'injection (2), et réfléchir le faisceau lumineux (F) vers la fibre optique de collection (3),
• le détecteur (30) est configuré pour mesurer une puissance optique de calibration $P_{rm}$ du faisceau lumineux (F) reçu et réfléchi par l'élément de calibration (110).

3. Système (100) selon l'une quelconque des revendications précédentes, dans lequel l'élément de calibration (110) comprend au moins un miroir (111) présentant une surface courbe ellipsoïdale et dans lequel la fibre optique d'injection (2), la fibre optique de collection (3) et un axe normal de l'au moins un miroir (111) sont compris dans un même plan non parallèle à un plan d'extension principale du substrat (S).

4. Système (100) selon la revendication précédente, dans lequel l'écart quadratique moyen $\Delta\delta$ entre la surface courbe ellipsoïdale et une surface ellipsoïdale idéale est inférieur ou égal à 30 nm, de préférence inférieur ou égal à 20 nm.

5. Système (100) selon l'une quelconque des revendications 3 et 4, dans lequel la surface courbe de l'au moins un miroir (111) est recouverte d'une couche métallique à base d'aluminium.

6. Système (100) selon l'une quelconque des revendications 3 à 5, dans lequel la perte d'insertion $IL_{mir}$ de l'élément de calibration (110) est inférieure ou égale à 0,85 dB $\pm$ 0,1 dB.

7. Système (100) selon l'une quelconque des revendications précédentes, dans lequel l'élément de calibration (110) comprend un seul miroir (111) configuré de sorte que le faisceau lumineux (F) transmis par la fibre optique d'injection (2) soit directement réfléchi sur le miroir (111) vers la fibre optique de collection (3).

8. Système (100) selon l'une quelconque des revendications 1 à 6, dans lequel l'élément de calibration (110) comprend une paire de miroirs (111) présentant chacun une surface courbe, les deux miroirs (111) étant disposés de sorte que leurs axes normaux se croisent, l'élément de calibration (110) étant configuré de sorte que le faisceau lumineux (F) transmis par la fibre optique d'injection (2) soit réfléchi par l'un des deux miroirs (111) vers l'autre puis réfléchi par l'autre des deux miroirs (111) vers la fibre optique de collection (3).

9. Système (100) selon la revendication précédente, dans lequel les axes normaux des deux miroirs (111) de l'élément de calibration (110) forment un angle de 90 degrés entre eux.

10. Système (100) selon l'une quelconque des revendications 1 à 6, dans lequel l'élément de calibration (110) comprend un miroir (111) présentant une surface courbe et un prisme (112) surmontant le miroir (111), ledit prisme (112) présentant deux faces supérieures (112a, 112b) inclinées l'une par rapport à l'autre, l'élément de calibration (110) étant configuré de sorte que le faisceau lumineux (F) transmis par la fibre optique d'injection (2) soit réfracté par l'une des faces supérieures (112a, 112b) vers le centre de la surface courbe du miroir (111), puis réfléchi sur le miroir (111) vers l'autre des faces supérieures (112a, 112b), pour être ensuite réfracté vers la fibre optique de collection (3).

11. Système (100) selon l'une quelconque des revendications précédentes, dans lequel l'élément de calibration (110) est directement intégré sur le même substrat (S) que le circuit photonique (20).

12. Système (100) selon l'une quelconque des revendications 1 à 10, dans lequel l'élément de calibration (110) est intégré sur un substrat de calibration (S') différent et séparé du substrat (S).

13. Procédé de mesure de pertes d'insertions absolues $IL_{cp}$ du circuit photonique (20) en utilisant le système (100) selon l'une quelconque des revendications précédentes, ledit procédé comprenant, lors d'une étape de calibration :

• une transmission par la première fibre optique (1), du faisceau lumineux (F) émis par la source de lumière (10), vers la fibre optique d'injection (2) en passant par le premier connecteur (C12) de fibres,
• une transmission par la fibre optique d'injection (2) du faisceau lumineux (F) vers l'élément de calibration (110),
• une collection par la fibre optique de collection (3) du faisceau lumineux (F) provenant de l'élément de calibration (110), vers la deuxième fibre optique (4), en passant par le deuxième connecteur (C34) de fibres,
• une transmission par la deuxième fibre optique (4), du faisceau lumineux (F) collecté par la fibre optique de collection (3), vers le détecteur (30),
• une première mesure par le détecteur (30) de la puissance optique de calibration $P_{rm}$ du faisceau lumineux (F) transmis par la deuxième fibre optique (4), ladite première mesure comprenant les première et deuxième pertes d'insertion $IL_{C12}$, $IL_{C34}$,

ledit procédé comprenant en outre, lors d'une étape de mesure :

• une transmission par la première fibre optique (1), du faisceau lumineux (F) émis par la source de lumière (10), vers la fibre optique d'injection (2) en passant par le premier connecteur (C12) de fibres,
• une transmission par la fibre optique d'injection (2) du faisceau lumineux (F) vers l'interface d'entrée (21) du circuit photonique (20),
• une collection par la fibre optique de collection (3) du faisceau lumineux (F) provenant de l'interface de sortie (22) du circuit photonique (20), vers la deuxième fibre optique (4), en passant par le deuxième connecteur (C34) de fibres,
• une transmission par la deuxième fibre optique (4), du faisceau lumineux (F) collecté par la fibre optique de collection (3), vers le détecteur (30),
• une deuxième mesure par le détecteur (30) de la puissance optique de caractérisation $P_{cp}$ du faisceau lumineux (F) transmis par la deuxième fibre optique (4), ladite deuxième mesure permettant de déterminer les pertes d'insertion absolues $IL_{cp}$ du circuit photonique (20), par comparaison avec la première mesure.

14. Procédé de mesure de pertes d'insertions absolues $IL_{cp}$ du circuit photonique (20) selon la revendication précédente, dans lequel les pertes d'insertions absolues $IL_{cp}$ du circuit photonique (20) sont déterminées à partir de la puissance optique de caractérisation $P_{cp}$, la puissance optique de calibration $P_{rm}$ et la perte d'insertion $IL_{mir}$ de l'élément de calibration (110), telles que : $IL_{cp} = IL_{mir} + P_{rm} - P_{cp}$.

FIG. 1A

FIG. 1B

FIG. 2

FIG. 3

FIG. 4

21    23    22

20

5

110, 111

A    A

10    30

y
z    x

FIG. 5A

100

10    30
1    4
C12    C34
2    3
F₁    F₁
110, 111
5, 5'

z
y    x

FIG. 5B

FIG. 6A

FIG. 6B

FIG. 7A

FIG. 7B

**EP 4 715 361 A1**

Europäisches
Patentamt

European
Patent Office

Office européen
des brevets

# RAPPORT DE RECHERCHE EUROPEENNE

Numéro de la demande

EP 25 20 2182

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | WO 2023/204753 A1 (ADVANCED MICRO FOUNDRY PTE LTD [SG]) 26 octobre 2023 (2023-10-26) * alinéas [0027] - [0044]; figure 1 * ----- | 1-14 | INV. G01M11/00 |
| A | US 2022/065743 A1 (SIMARD ALEXANDRE D [CA] ET AL) 3 mars 2022 (2022-03-03) * alinéas [0041] - [0048]; figures 1A, 1B * ----- | 1-14 | |
| A | CN 111 307 415 A (INST MICROELECTRONICS CAS) 19 juin 2020 (2020-06-19) * abrégé; figure 1 * ----- | 1-14 | |

DOMAINES TECHNIQUES RECHERCHES (IPC)

G01M

Le présent rapport a été établi pour toutes les revendications

| Lieu de la recherche | Date d'achèvement de la recherche | Examinateur |
|---|---|---|
| La Haye | 18 septembre 2025 | Debesset, Sébastien |

EPO FORM 1503 03.82 (P04C02)

**ANNEXE AU RAPPORT DE RECHERCHE EUROPEENNE
RELATIF A LA DEMANDE DE BREVET EUROPEEN NO.**

**EP 25 20 2182**

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

**18-09-2025**

| Document brevet cité au rapport de recherche | Date de publication | Membre(s) de la famille de brevet(s) | Date de publication |
|---|---|---|---|
| WO 2023204753 A1 | 26-10-2023 | CN 118871762 A | 29-10-2024 |
| | | EP 4511627 A1 | 26-02-2025 |
| | | JP 2025516392 A | 28-05-2025 |
| | | TW 202407308 A | 16-02-2024 |
| | | US 2025244202 A1 | 31-07-2025 |
| | | WO 2023204753 A1 | 26-10-2023 |
| US 2022065743 A1 | 03-03-2022 | US 2022065743 A1 | 03-03-2022 |
| | | US 2023003614 A1 | 05-01-2023 |
| CN 111307415 A | 19-06-2020 | AUCUN | |

EPO FORM P0460

Pour tout renseignement concernant cette annexe : voir Journal Officiel de l'Office européen des brevets, No.12/82